# Europäisches Patentamt
# European Patent Office
# Office européen des brevets

(19)

(11) Numéro de publication: **0 230 817**
**B1**

(12)

# FASCICULE DE BREVET EUROPEEN

(45) Date de publication du fascicule du brevet:
**14.02.90**

(51) Int. Cl.⁴: **G01P 3/44**

(21) Numéro de dépôt: **86402817.0**

(22) Date de dépôt: **16.12.86**

(54) **Dispositif d'élaboration d'un signal de tachymétrie de résolution infinie et sans ondulation à partir d'un capteur de position inductif.**

(30) Priorité: **16.12.85  FR 8518629**

(43) Date de publication de la demande:
**05.08.87 Bulletin 87/32**

(45) Mention de la délivrance du brevet:
**14.02.90 Bulletin 90/7**

(84) Etats contractants désignés:
**CH DE FR GB IT LI NL SE**

(56) Documents cités:
**EP-A- 0 127 890**
**EP-A- 0 148 518**
**US-A- 4 011 440**

(73) Titulaire: **TELEMECANIQUE, 43-45, Boulevard Franklin Roosevelt, F-92504 Rueil-Malmaison Cedex(FR)**

(72) Inventeur: **Pournain, Michel, 16, rue des Ecoles Saubens, F-31600 Muret(FR)**

(74) Mandataire: **de Saint-Palais, Arnaud Marie et al, CABINET MOUTARD 35, Avenue Victor Hugo, F-78960 Voisins le Bretonneux(FR)**

ACTORUM AG

## Description

L'invention concerne les servo-mécanismes de haute précision, en particulier dans le domaine des biens d'équipement.

Ces servo-mécanismes utilisent souvent un moteur autosynchrone sans balais qui nécessite l'utilisation d'un capteur inductif pour la détermination de la position du rotor. Par ailleurs la mise en oeuvre du servo-mécanisme nécessite un tachymètre pour déterminer à tout instant la vitesse exacte de rotation du rotor. Il est donc tentant d'essayer d'éviter un double appareillage et de déterminer la vitesse directement à partir du résolveur. D'une manière générale le problème posé est donc d'engendrer un signal de tachymétrie à partir d'un capteur inductif tel qu'un résolveur (biphasé), un synchro (triphasé) ou encore un inductosyn (déplacement linéaire).

Pour résoudre ce problème on connaît déjà des dispositifs, décrits en particulier dans les demandes EP-A 0 127 890 et US-A 4 011 440.

Le dispositif decrit dans la demande EP-A 0 127 890 utilise en circuit RC attaqué par les deux signaux de phases du capteur inductif, lui-même alimenté par un signal de référence sinusoïdal, ce circuit RC engendrant un signal analogique sinusoïdal, dont l'angle de phase est rigoureusement égal au décalage angulaire du rotor du capteur par rapport au stator, ce signal analogique étant ensuite numérisé par un trigger ou similaire pour fournir un signal d'entrée en créneaux. De plus l'oscillateur qui fournit ledit signal de référence est agencé pour fournir également un deuxième signal de référence déphasé de π/2, ces deux signaux de référence étant également numérisés.

Ce dispositif utilise par ailleurs deux comparateurs de phase numériques constitués essentiellement par deux portes OU exclusif comparant respectivement ledit signal d'entrée et l'un ou l'autre des deux signaux de référence afin d'engendrer deux signaux à modulation de largeur de créneaux à largeurs alternativement croissantes et décroissantes, qui sont séparément filtrés puis dérivés pour engen drer un signal trapézoïdal ainsi que ce même signal déphasé de π/2, ces deux derniers signaux étant eux-mêmes séparément traités par des inverseurs pour obtenir finalement quatre signaux trapézoïdaux déphasés de π/2 dont les amplitudes sont proportionelles à la vitesse de rotation. Enfin le dispositif comporte une logique complexe qui, à partir des deux signaux filtrés, prélève sur chacun des quatre signaux trapézoïdaux précédents les deux quarts centraux de chaque demi-période.

Toutefois si l'on veut par ce dispositif obtenir un signal de tachymétrie correct, il est nécessaire d'effectuer un apairage des composants des deux voies, ainsi qu'un réglage de zéro des deux dérivateurs et également un réglage de zéro des deux inverseurs, faute de quoi on obtiendrait par exemple pour une vitesse de rotation constante un signal de tachymétrie non constant sur un tour.

Le but de l'invention est de réaliser un dispositif qui engendre pareillement un signal de tachymétrie à partir des deux signaux de phase d'un capteur inductif, mais qui soit d'une réalisation plus simple, et surtout qui ne nécessite aucun réglage ni apairage de composant.

L'invention, comme le dispositif précédent, utilise classiquement un circuit RC et un trigger pour l'élaboration du signal d'entrée principal numérisé, mais elle s'en distingue par le fait :

- que chacun des deux comparateurs de phase numérique engendrant un signal à modulation de largeur de créneaux est constitué par un montage de simples bascules pour établir le signal à modulation de largeur correspondant pour chaque transition d'un sens déterminé d'un signal d'entrée du comparateur, et pour l'interrompre pour chaque transition d'un sens déterminé de l'autre signal d'entrée du comparateur, les deux signaux d'entrée du comparateur considérés étant le signal de référence et le signal principal pour un des comparateurs, et pour l'autre comparateur ces mêmes signaux dont un transite par un inverseur pour le remplacer par son complément;

- qu'à chaque comparateur de phase numérique est associé un détecteur de retour à zéro constitué par un autre montage à bascules agencé pour établir un signal de retour à zéro correspondant lorsque sont réalisées les conditions de passage du signal à modulation de largeur de créneaux d'un état à l'autre état et que ce signal à modulation de largeur de créneaux est déjà dans l'autre état;

- que les deux signaux de retour à zéro ainsi engendrés attaquent une bascule de mémorisation qui produit un signal de sélection;

- qu'un commutateur est commandé par ledit signal de sélection afin de prélever, dans chacun des signaux à modulation de largeur de créneaux après passage dans un filtre passe-bas, la deuxième moitié de chaque cycle de l'un et l'autre signal alternativement afin d'obtenir un signal en dents de scie unique; et

- qu'un différentiateur unique engendre le signal de tachymétrie à partir de ce signal en dents de scie unique, avec des dispositifs d'élimination des discontinuités.

D'autres particularités de l'invention apparaîtront dans la description qui va suivre d'un mode de réalisation pris comme exemple et représenté sur le dessin annexé, sur lequel :

la figure 1 est le schéma général du dispositif;

la figure 2 est le schéma de détail d'un des comparateurs de phase numériques et détecteurs de retour à zéro;

la figure 3 représente le détail du différentiateur avec ses dispositifs d'initiation et de mémorisation;

les figures 4 et 5 sont des chronogrammes illustrant le fonctionnement du dispositif de la figure 2, respectivement pour une vitesse positive et une vitesse négative du rotor du capteur inductif; et

la figure 6 représente les chronogrammes du fonctionnement d'ensemble du dispositif.

Le capteur de position inductif, ou synchrorésolveur, non représenté, est alimenté par un oscillateur sinusoïdal, non représenté, de pulsation w parfaitement stable. Ce signal sinusoïdal est alimenté également à l'entrée Po du dispositif, tandis que les deux signaux de phase du capteur diphasé sont alimentés aux entrées P1 et P2 de ce même dispositif. D'une manière classique un circuit RC est monté entre P1 et P2 et fournit un signal sinusoïdal de pulsation w et d'angle de phase θ par rapport au signal Po. Ce signal sinusoïdal est numérisé dans un trigger T1 et fournit un signal principal S en forme de créneaux relativement réguliers, car θ ne varie que très lentement par rapport à la pulsation w.

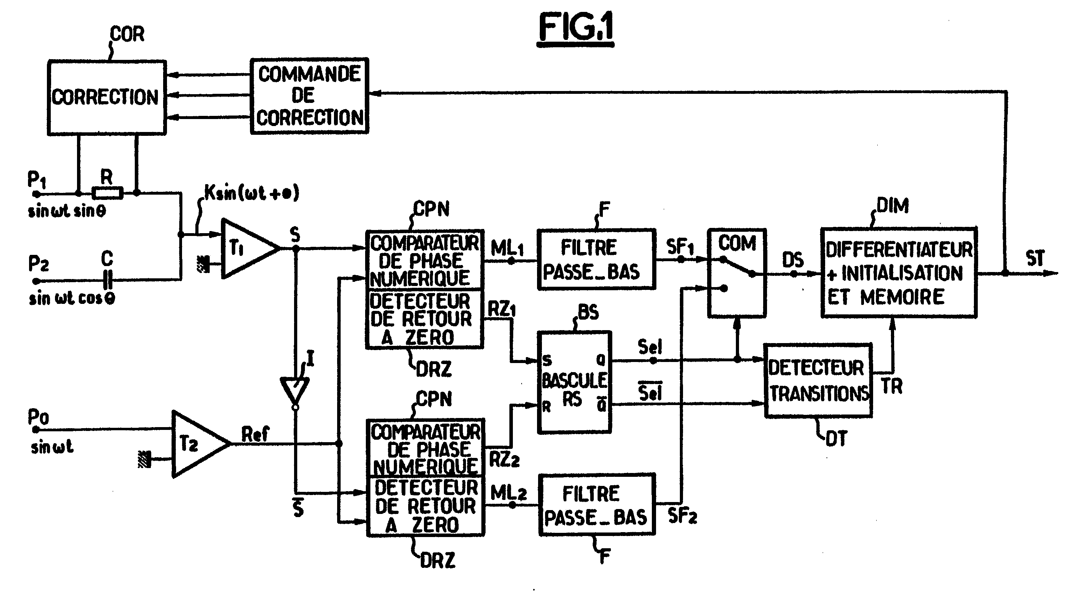

De la même façon le signal sinusoïdal initial Po est numérisé par un deuxième trigger T2 qui donne un signal de référence Ref, également en créneaux réguliers de largeur très voisine. Enfin on voit sur la figure 1 la présence d'un inverseur I qui transforme le signal S en son complément S̄.

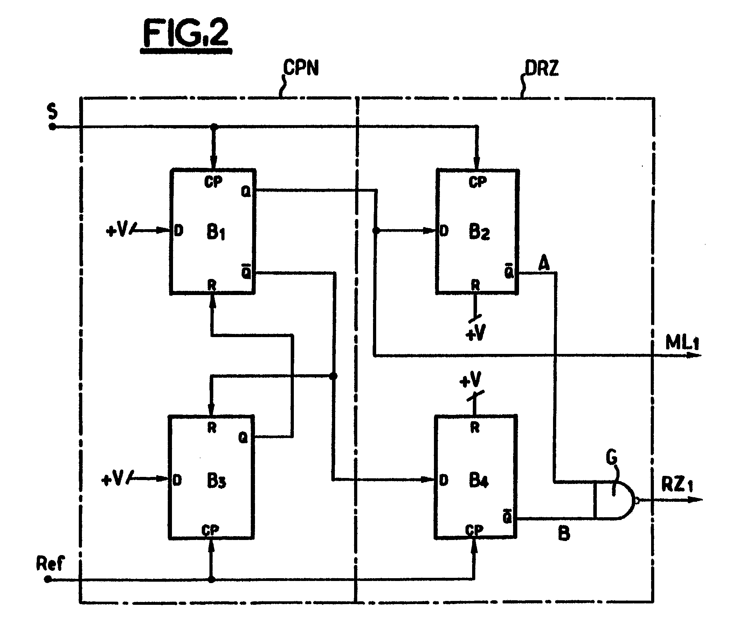

Selon une des particularités essentielles de l'invention, chacun des signaux Ref et S, ainsi que Ref et S̄ sont comparés séparément dans deux comparateurs de phase numériques CPN, associés chacun à un détecteur de retour à zéro DRZ dont le détail est donné sur la figure 2 pour l'un de ces ensembles. Il est constitué essentiellement par quatre bascules de type D, référencées B1 à B4 et qui sont couplées comme indiqué sur le schéma.

La bascule B1 est sensible aux transitions positives de S arrivant par l'entrée d'horloge CP et qui provoquent l'établissement de Q, donc de la sortie à modulation de largeur de créneaux ML1. La bascule B3 d'autre part est sensible aux transitions positives de Ref arrivant par son entrée d'horloge CP et qui produisent par sa sortie directe Q, reliée à la remise à zéro R de B1, l'interruption du signal ML1. La bascule B3 à son tour est remise à zéro par la sortie inverse Q̄ de B1 qui attaque sa remise à zéro R.

Etant donné que, comme on l'a vu plus haut, les largeurs des créneaux de S et Ref sont très voisines, les transitions se correspondent sensiblement nombre pour nombre, c'est-à-dire qu'en général lorsqu'une impulsion positive de S arrive, la bascule B1 a été mise au préalable à l'état zéro, de sorte que l'entrée de données D de B2 se trouve à zéro au moment où cette impulsion arrive, ce qui a pour effet de maintenir la sortie Q̄ de B2 référencée A à l'état 1. De même que lorsqu'une impulsion Ref arrive sur l'entrée d'horloge CP de la bascule B4, celle-ci a en général son entrée de données D à zéro, de sorte que sa sortie Q̄ référencée B reste à l'état 1. La porte NON ET référencée G met donc normalement la sortie de remise à zéro RZ1 à zéro.

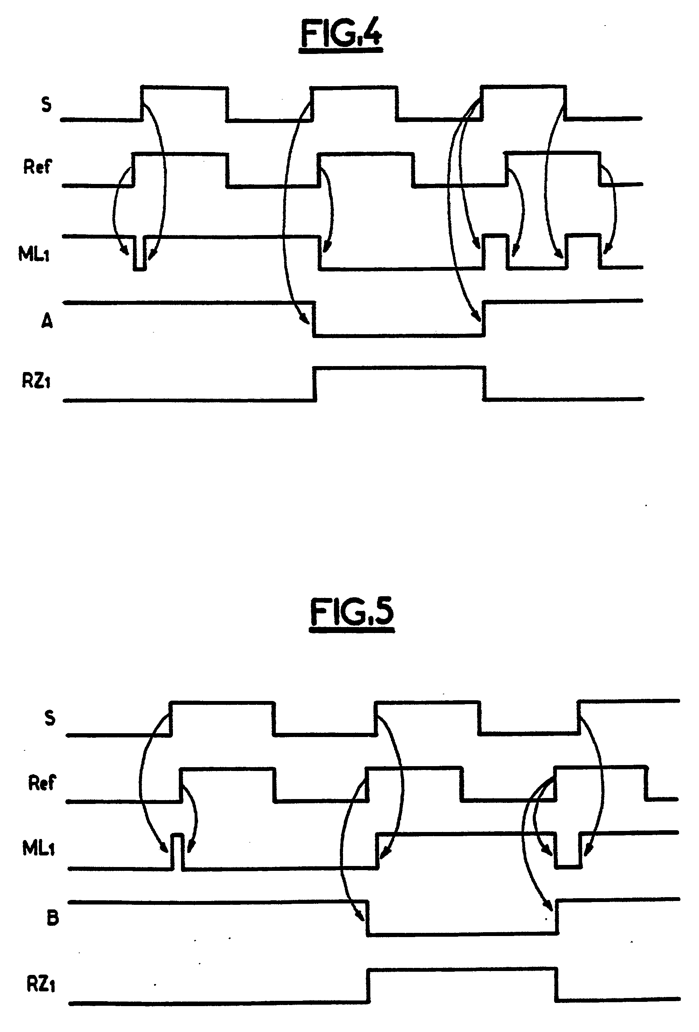

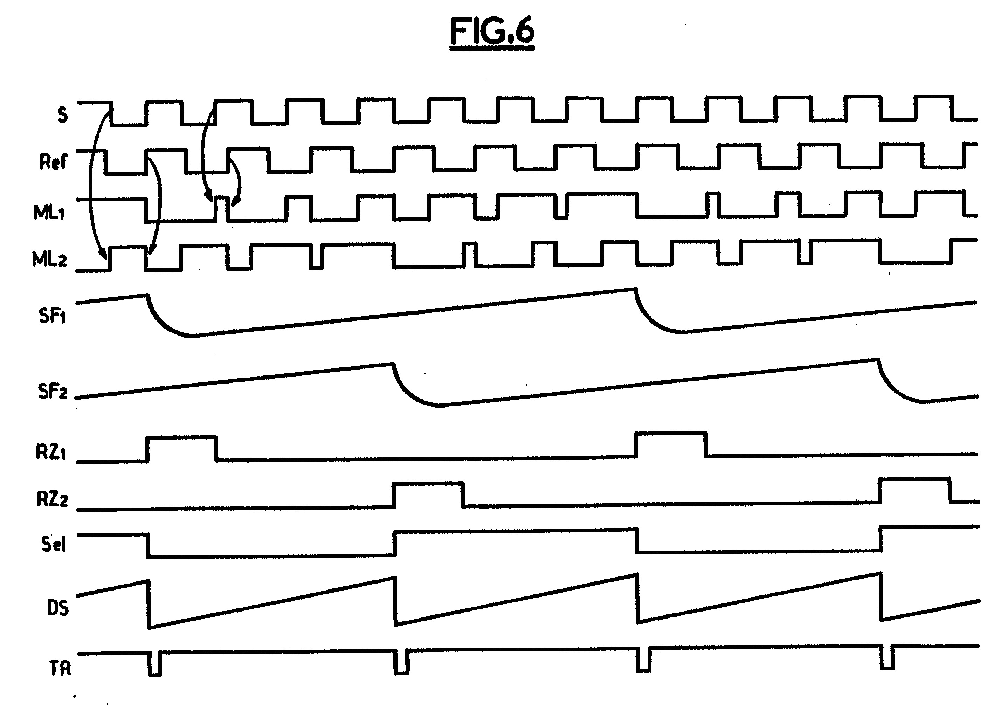

Toutefois lorsqu'on arrive à proximité d'une coïncidence, il arrive, comme illustré sur la figure 4, qu'une transition positive de S arrive sur B2 alors qu'il n'est pas survenu d'impulsion positive de Ref provoquant la remise à zéro de B1 depuis l'impulsion positive précédent de S. Dans ce cas, l'entrée de donnée D de la bascule B2 va se trouver à l'état 1 lorsqu'arrive l'impulsion de S à son entrée de commande CP, ce qui a donc pour effet de mettre A à l'état zéro, donc RZ1 à l'état 1 comme il apparaît sur les chronogrammes de la figure 4, qui correspondent à un sens de rotation du capteur. La même explication s'applique à l'autre sens du capteur avec la bascule B4 et l'entrée B de G, ce qui correspond au chronogramme de la figure 5.

Tout ce qui précède concerne le comparateur de phase numérique CPN et le détecteur de retour à zéro DRZ de la partie supérieure de la figure 1, et s'applique identiquement à l'ensemble similaire du bas de la figure 1, à part le remplacement du signal S par le signal S̄, ce qui, compte tenu de la nature des signaux, revient à utiliser un signal déphasé de π, les signaux sortants étant par ailleurs affectés de l'indice 2 à la place de l'indice 1.

Les signaux à modulation de largeur de créneaux ML1 et ML2 sont chacun filtrés à travers un filtre passe-bas F, et donnent ainsi lieu à des signaux filtrés respectivement SF1 et SF2, dont on voit le chronogramme sur la figure 6. De leur côté les signaux de retour à zéro RZ1 et RZ2 attaquent les entrées S (set) et R (reset) d'une bascule de type RS, référencée BS, qui mémorise le dernier retour à zéro et élabore à sa sortie directe Q un signal de sélection Sel, lequel commande un commutateur COM qui sélectionne, comme il apparaît sur les chronogrammes de la figure 6, alternativement les signaux SF1 et SF2 pour prélever dans chacun de ces signaux la deuxième moitié, c'est-à-dire la partie strictement linéaire du signal, éliminant ainsi la première moitié de chaque dent de scie dont la linéarité est affectée par le temps d'établissement des filtres.

On obtient ainsi à la sortie DS de ce commutateur un signal unique en dents de scie représenté sur le chronogramme de la figure 6. En même temps un détecteur de transitions DT sensible aux transitions positive et négative de Sel, ou encore aux transitions positives de Sel et de S̄el élabore des signaux de transitions TR, représentés également sur le chronogramme de la figure 6 et dont la position correpond aux discontinuités du signal DS.

Il est à remarquer que le signal en dents de scie unique DS est en dents de scie montantes ou descendantes selon le sens de rotation du capteur, et qu'il suffit donc de différencier ce signal unique pour avoir directement le signal de tachymétrie recherché, en grandeur en signe, en prenant soin toutefois d'éliminer les discontinuités dues aux transitions de DS.

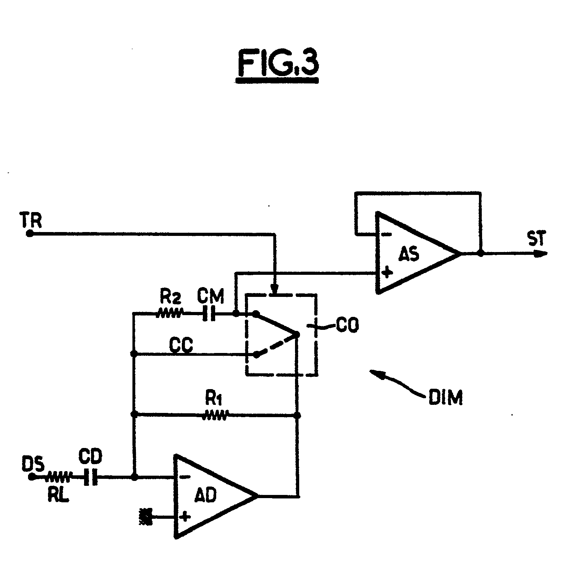

Pour cela on peut par exemple utiliser le circuit DIM de différentiation avec initialisation et mémoire représenté sur la figure 3, où l'on voit un amplificateur opérationnel AD monté en différentiateur avec une résistance R1, un condensateur de différentiation CD et une résistance de limitation de courant RL qui est chargé par le signal DS. L'entrée directe de l'amplificateur AD est à la masse, de sorte que son entrée inverseuse est également asservi au potentiel zéro par le montage indiqué, tandis que la sortie de l'amplificateur AD est à un potentiel proportionnel au signal de tachymétrie recherché.

Un commutateur électronique CO, commandé directement par le signal TR, ferme normalement ce circuit sur un condensateur de mémoire CM avec sa résistance de charge R2, ce condensateur restant donc constamment chargé à une tension représentative du signal de tachymétri. Ce signal, prélevé entre CM et CO, est envoyé à un amplificateur suiveur AS qui fournit le signal sortant de tachymétrie ST en introduisant une haute impédance à la sortie du condensateur CM. Lorsqu'une impulsion se présente sur le signal de transition TR, le commutateur CO ouvre donc le circuit du condensateur de mémoire, ce dernier continuant à fournir la tension mise en mémoire à l'amplificateur suiveur, et en même temps ce commutateur referme, par sa position représentée en trait interrompu sur la figure 3, une connexion de court-circuit CC qui force en initialisation le circuit différentiateur pour décharger ou charger le condensateur de différentiation et permettre de recommencer un autre cycle. Le dispositif assure ainsi une parfaite continuité du signal de tachymétrique ST.

Grâce à l'utilisation d'un différentiateur unique, on voit qu'aucun apairage de composants, ni aucun réglage d'équilibrage de zéro ou autre n'est nécessaire et que le circuit, par ailleurs relativement simple, ne nécessite en fait aucun réglage.

La précision du signal de tachymétrie obtenue dépend, comme exposé plus haut, du fait que la pulsation w du signal de référence est suffisamment élevée par rapport à la pulsation W qui correspond à la rotation du capteur pour que celle-ci soit négligeable. S'il n'en est pas ainsi, ou si l'on veut améliorer encore la précision, on peut ajouter, comme représenté sur la figure 1, un circuit de correction COR qui tient compte de la dérivée de la position générée par le circuit RC, en choisissant les valeurs R et de C de telle manière que

$$R.C = (1/w).(1-W/w)$$

Cette correction de R ou de C peut être réalisée soit par un moyen numérique, tel qu'un réseau de résistances ou de condensateurs commutés pour différentes vitesses de rotation, soit par un moyen analogique tel qu'un amplificateur à gain variable ou une diode à variation de capacité.

## Revendications

1. Dispositif d'élaboration d'un signal de tachymétrie de résolution infinie et sans ondulation à partir d'un capteur de position inductif alimenté par un signal sinusoïdal de référence (Po) et fournissant deux signaux de phase (P1, P2), dispositif dans lequel un circuit résistance-capacité accordé à la fréquence du signal de référence est alimenté par les deux signaux de phase du capteur et fournit un signal sinusoïdal dont l'angle de phase (θ) est proportionnel à la rotation du capteur à un tour près, ce signal étant ensuite numérisé (S) pour être traité par des comparateurs de phase numérique et des filtres passe-bas avant différentiation, caractérisé par le fait

- que chacun des comparateurs de phase numériques (CPN) engendrant un signal à modulation de largeur de créneaux (ML1, ML2) est constitué par un montage de simple bascules (B1, B3) agencé pour établir le signal à modulation de largeur de créneaux correspondant pour chaque transition d'un sens déterminé d'un signal d'entrée, et l'interrompt pour chaque transition d'un sens déterminé d'un autre signal d'entrée, les deux signaux d'entrée précités étant respectivement pour un comparateur de phase le signal de référence (Ref) et le signal d'entrée principal (S), et pour l'autre comparateur de phase ces mêmes signaux dont un transite par l'intermédiaire d'un inverseur (I) pour le remplacer par son complément (S̄);

- qu'à chaque comparateur de phase numérique (CPN) est associé un détecteur de retour à zéro (DRZ) constitué d'un autre montage à bascules (B2, B4) agencé pour établir un signal de retour à zéro correspondant (RZ1, RZ2), lorsque sont réalisées les conditions de passage du signal à modulation de largeur de créneaux (ML1, ML2) d'un état à l'autre état, et que ce signal à modulation de largeur de créneaux est déjà dans l'autre état;

- que les deux signaux de retour à zéro précités (RZ1, RZ2) commandent une bascule de mémorisation (BS) qui élabore un signal de sélection (Sel);

- qu'un commutateur électronique (COM) est commandé par ce signal de sélection (Sel) afin de prélever, dans chacun des signaux filtrés (SF1, SF2) qui résultent du traitement des signaux à modulation de largeur de créneaux (ML1, ML2) dans des filtres passe-bas respectifs (F), la deuxième moitié de chaque cycle afin d'obtenir un signal de sortie unique (DS) en dents de scie; et

- que le signal de tachymétrie sortant (ST) est élaboré à partir de ce signal unique en dents de scie (DS) à l'aide d'un différentiateur unique (DIM) avec dispositif d'élimination des discontinuités.

2. Dispositif selon la revendication 1, caractérisé par le fait que chacun des ensembles d'un comparateur de phase numérique (CPN) et de son détecteur de retour à zéro associé (DRZ) comporte quatre bascules de type D dont les deux premières (B1, B2) ont leur entrée d'horloge (CP) raccordée au signal d'entrée correspondant (S, S̄) et les deux autres (B3, B4) ont leur entrée d'horloge (CP) raccordée au signal de référence (Ref), la sortie directe (Q) de la première bascule (B1) étant raccordée à la sortie de signal à modulation de largeur de créneaux (ML1, ML2) ainsi qu'à l'entrée de donnée (D) de la deuxième bascule (B2), que la sortie directe (Q) de la troisième bascule (B3) est reliée à l'entrée de remise à zéro (R) de la première bascule (B1), que la sortie inverseuse (Q̄) de la première bascule (B1) est reliée à l'entrée de donnée (D) de la quatrième bascule (B4) ainsi qu'à l'entrée de remise à zéro (R) de la troisième bascule (B3), enfin que les sorties (A, B) de la deuxième (B2) et de la quatrième (B4) bascules sont reliées à une porte logique (G) qui fournit le signal de retour à zéro (RZ1, RZ2).

3. Dispositif selon une des revendications précédentes, caractérisé par le fait que ledit dispositif d'élimination des discontinuités est constitué par un détecteur de transitions (DT) commandé par ledit signal de sélection (Sel), et éventuellement par son complément (S̄el), et que le montage différentiateur (DS, CD, AD, R1) comporte un circuit de mémoire (R2, CM), et un circuit de court-circuit (CC) connectés tour à tour par un commutateur électronique (CO) commandé par ledit signal de transition (TR) élaboré par le détecteur de transition (DT) afin, dans une position de repos de réaliser la mise en mémoire de la valeur du signal de tachymétrie dans un condensateur (CM), et dans une position active de courte durée correspondant à chaque transition de produire la l'initialisation du circuit différentiateur.

4. Dispositif selon une des revendications précédentes, caractérisé par le fait que l'ensemble du circuit comprend un retour du signal de tachymétrie (ST) vers une commande de correction (COR) réajustant l'équilibrage du circuit RC d'entrée.

## Patentansprüche

1. Vorrichtung zur Erzeugung eines Geschwindigkeitssignals von unbegrenzter Auflösung und ohne Wellikgkeit, das von einem induktiven Stellungsaufnehmer stammt, welchem ein sinusförmiges Referenzsignal (Po) zugeführt wird und welcher zwei Phasensignale (P1, P2) abgibt, Vorrichtung, in der die beiden Phasensignale des Aufnehmers in einen, auf die Referenzsignalfrequenz abgestimmten Widerstands/Kapazitätskreis eingegeben werden, der ein sinusförmiges Signal abgibt, dessen Phasenwinkel (θ) proportinal zu den Umdrehungen, plus/weniger eine Umdrehung, des Aufnehmers ist, welches Signal dann digitalisiert wird (S), um, vor seiner Differentiation, von digitalen Phasenvergleichern und Tiefpassfiltern verarbeitet zu werden, dadurch gekennzeichnet

– dass jeder der digitalen Phasenvergleicher (CPN), der ein Signal mit modulierter Rechteckimpulsbreite (ML1, ML2) abgibt, durch Zusammenschalten einfacher Kippkreise (B1, B3) gebildet wird, die so ausgelegt sind, dass sie bei jedem Übergang des Eingangssignals in einer bestimmten Richtung das entsprechende Signal mit modulierter Rechteckimpulsbreite erzeugen und es bei jedem Übergang eines anderen Eingangssignal in einer bestimmten Richtung unterbrechen, wobei die beiden obengenannten Eingangssignale jeweils für einen Phasenvergleicher das Referenzsignal (Ref) und das Haupteingangssignal (S) bilden und für den anderen Phasenvergleicher die gleichen Signale, deren eines durch einen Inverter (I) geführt und durch sein Gegensignal (S̄) ersetzt wird;

– dass jedem digitalen Phasenvergleicher (CPN) Rückstelldetektor (DRZ) zugeordnet ist, gebildet von einer anderen Kippkreiszusammenschaltung (B2, B4), die so ausgelegt ist, dass sie ein entsprechendes Rückstellsignal (RZ1, RZ2) erzeugt, wenn die Bedingungen für den Übergang des Signals mit modulierter Rechteckimpulsbreite (ML1, ML2) von einem Zustand in den anderen gegeben sind und besagtes Signal mit modulierter Rechteckimpulsbreite sich schon im anderen Zustand befindet;

– dass die beiden obengenannten Rückstellsignale (RZ1, RZ2) einen Speicherkippkreis (BS) beaufschlagen; der ein Selektionssignal (Sel) erzeugt;

– dass ein elektronischer Umschalter (COM) vom Selektionssignal (Sel) beaufschlagt wird, um jedem der gefilterten Signale (SF1, SF2), die sich durch die Verabeitung der Signale mit modulierter Rechteckimpulsbreite (ML1, ML2) in entsprechenden Tiefpassfiltern (F) ergeben, die zweite Hälfte jedes Zyklus zu entnehmen, um ein einziges sägezahnförmiges Ausgangssignal (DS) zu erhalten; und

– dass das austretende Geschwindigkeitssignal (ST) von besagtem einzigem sägezahnförmigem Signal (DS) ausgehend erzeugt wird, mittels eines einzigen Diffentiators (DIM) mit einem Mittel zur Beseitigung der Diskontinuitäten.

2. Vorrichtung nach Anspruch 1, dadurch gekennzeichnet, daß jede Einheit: digitaler Phasenvergleicher (CPN) und zugeordneter Rückstelldetektor (DRZ) vier Kippkreise des D-Typs aufweist, deren erste zwei (B1, B2) durch ihre Uhreneingänge (CP) an das entsprechende Eingangssignal (S, S̄) angeschlossen sind und deren andere zwei Kippkreise (B3, B4) durch ihre Uhreneingänge (CP) an das Referenzsignal (Ref) angeschlossen sind und der direkte Ausgang (Q) des ersten Kippkreises (B1) an den Ausgang des Signals mit modulierter Rechteckimpulsbreite (ML1, ML2) angeschlosssen ist, sowie an die Dateneingabe (D) des zweiten Kippkreises (B2), dass der direkte Ausgang (Q) des dritten Kippkreises (B3) an den Rückstelleingang (R) des ersten Kippkreises (B1) angeschlossen ist, dass der Inverterausgang (Q̄) des ersten Kippkreises (B1) an die Dateneingabe (D) des vierten Kippkreises (B4) angeschlossen ist, sowie an den Rückstelleingang (R) des dritten Kippkreises (B3), und daß schliesslich die Ausgänge (A, B) der zweiten (B2) und vierten (B4) Kippkreise an ein logisches Gate (G) angeschlossen sind, welches das Rückstellsignal (RZ1, RZ2) abgibt.

3. Vorrichtung nach einem der vorhergehenden Ansprüche, dadurch gekennzeichnet, dass besagte Vorrichtung zur Beseitigung der Diskontinuitäten von einem, vom besagten Selektionssignal (Sel) beaufschlagten, Übergangsdetektor (DT) gebildet wird und eventuell vom Gegensignal (S̄ēl), und dass die Differentiationsschaltung (DS, CD, AD, R1) einen Speicherkreis (R2, CM) und einen Kurzschlusskreis (CC) aufweist, welche einer nach dem anderen durch einen elektronischen Umschalter (CO) angeschlossen werden, welcher durch besagtes, vom Übergangsdetektor (DT) erzeugtes Übergangssignal (TR) beaufschlagt wird um, in einer Ruhestellung das Kennzeichen des Geschwindigkeitssignals in einen Kondensator (CM) einzuspeichern und, in einer aktiven Stellung von kurzer Dauer die jedem Übergang entspricht, die Initialisierung des Differentiationskreises zu bewirken.

4. Vorrichtung nach einem der vorhergehenden Ansprüche, dadurch gekennzeichnet, dass die Schalteinheit die Rückkehr des Geschwindigkeitssignals (ST) zu einer Korrektursteuerung (COR) vorsieht, welche den Ausgleich des Eingangskreises (RC) nachstellt.

## Claims

1. Devise for elaborating a speed signal of unlimited resolution and without undulation originating from an inductive position detector to which a sinusoidal reference signal (Po) is supplied and which provides two phase signals (P1, P2), device in which the two phase signals of the detector are supplied to a resistorcapacitor circuit adjusted to the reference signal frequency and which provides a sinusoidal signal the phase angle (θ) of which is proportional to the rotation of the detector, more or less one rotation, said signal then being digitized (S) to be processed by digital phase comparators and low-pass filters, before differentiation, characterized by the fact:

— that each of the digital phase comparators (CPN) producing a signal with square wave width modulation (ML1, ML2) is formed by a simple flip-flop assembly (B1, B3) mounted for producing the corresponding square wave width modulated signal for each transition in a determined direction of an input signal and interrupts said signal for each transition in a  determined direction of another input signal, the two aforementioned signals being respectively, for one phase comparator, the reference signal (Ref) and the main input signal (S), and for the other phase comparator the same signals, one of which passes through an inverter (I) to be replaced by its complementary signal (S̄);

— that each digital phase comparator (CPN) is associated with a reset sensor (DRZ) formed by another flip-flop assembly (B2, B4) mounted for producing a corresponding reset signal (RZ1, RZ2) when the conditions for the square wave width modulated signal (ML1, ML2) to pass from one state to another are established and when this square wave width modulated signal is already in the other state;

— that the two aforementioned reset signals (RZ1, RZ2) control a memorizing flip-flop (BS) which produces a selection signal (Sel);

— that an electronic switching device (COM) is controlled by said selection signal (Sel) for taking, from each of the filtered signals (SF1, SF2) resulting from the processing of the square-wave width modulated signals (ML1, ML2) in respective low-pass filters (F) the second half of each cylce so as to obtain a single saw-teeth output singal (DS); and

— that the outcoming speed signal (ST) is produced from said single saw-teeth signal (DS) by means of a single differentiator (DIM) provided weith a device for eliminating discontinuities.

2. The device as claimed in claim 1, characterized by the fact that each of the assemblies of one digital phase comparator (CPN) and its associated reset sensor (DRZ) comprises four D-type flip flops, the first two of which (B1, B2) having their clock input (CP) connected to the corresponding input signal (S, S̄) and the two other (B3, B4) having their clock input (CP) connected to the reference signal (Ref), the direct output (Q) of the first flip flop (B1) being connected to the output of the square wave width modulated signal (ML1, ML2), as well as to the data input (D) of the second flip flop (B2), that the direct output (Q) of the third flip flop (B3) is connected to the reset input (R) of the first flip flop (B1), that the inverting output (Q̄) of the first flip flop (B1) is connected to the data input (D) of the fourth flip flop (B4), as well as to the reset input (R) of the third flip flop (B3) and finally, that the outputs (A, B) of the second (B2) and fourth (B4) flip flops are connected to a logic gate (G) which supplies the reset signal (RZ1, RZ2).

3. The device as claimed in one of the preceding claims, characterized by the fact that said device for eliminating discontinuities is formed by a transition detector (DT) controlled by said selection signal (Sel) and, as required, by its complement (S̄el), and in that the differentiating assembly (DS, CD, AD, R1) comprises a memory circuit (R2, CM) and a short-circuit circuit (CC) connected in turn through an electronic switch (CO) controlled by said transition signal (TR) produced by the transition detector (DT), so as to effect, in the rest position, storing of the speed signal value in a capacitor (CM) and, in an active position of short duration, corressponding to each transition, effect the initialization of the differentiating circuit.

4. The device as claimed in one of the preceding claims, characterized by the fact that the circuit assembly comprises the return of the speed signal (ST) towards a correction control means (COR) readjusting the balance of the input circuit (RC).

# FIG.1

EP 0 230 817 B1

# FIG.2

CPN

DRZ

S

+V/ → D  B₁  CP  Q
           R  Q̄

+V/ → D  B₃  R  Q
           CP

Ref

CP  B₂  Q̄  A
D
R
+V

+V
R  B₄  Q̄
D
CP  B

ML₁

G

RZ₁

EP 0 230 817 B1

# FIG.3

# FIG.4

# FIG.5

# FIG.6

EP 0 230 817 B1